**Europäisches Patentamt**

**European Patent Office**

**Office européen des brevets**

(19)

(11) Veröffentlichungsnummer: **0 286 811**
**B1**

(12) # EUROPÄISCHE PATENTSCHRIFT

(45) Veröffentlichungstag der Patentschrift:
25.04.90

(21) Anmeldenummer: 88102934.2

(22) Anmeldetag: 26.02.88

(51) Int. Cl.⁴: **B23Q 11/08**

(54) **Teleskopabdeckung.**

(30) Priorität: 16.04.87 DE 3713097

(43) Veröffentlichungstag der Anmeldung:
19.10.88 Patentblatt 88/42

(45) Bekanntmachung des Hinweises auf die Patenterteilung:
25.04.90 Patentblatt 90/17

(84) Benannte Vertragsstaaten:
DE ES FR GB IT

(56) Entgegenhaltungen:
CH-A- 323 675
CH-A- 473 646
DE-C- 1 157 055

(73) Patentinhaber: **Gebr. Hennig GmbH, Dorfstrasse 41,
D-8045 Ismaning(DE)**

(72) Erfinder: **Diels, Wolfgang, Pfitznerstrasse 11/I.,
D-8000 München 40(DE)**

(74) Vertreter: **Tetzner, Volkmar, Dr.-Ing. Dr. jur.,
Van-Gogh-Strasse 3, D-8000 München 71(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Teleskopabdeckung für Führungsbahnen einer Werkzeugmaschine, gemäß dem Oberbegriff des Patentanspruches 1.

Teleskopabdeckungen sind in verschiedenen Ausführungsformen aus der Praxis hinreichend bekannt. Hierbei ist beispielsweise der größte Abdeckkasten an einem stationären Teil der Werkzeugmaschine befestigt, während der kleinste Abdeckkasten an einem sich längs der Führungsbahnen beweglichen Teil der Werkzeugmaschine befestigt ist, so daß durch die Zusammenordnung der teleskopartig gegeneinander und ineinander verschiebbaren Abdeckkästen die Werkzeugmaschinen-Führungsbahnen in jeder Einstellposition des beweglichen Werkzeugmaschinenteiles ausreichend abgedeckt und somit geschützt werden kann.

Bei den aus der Praxis bekannten Ausführungsformen von Teleskopabdeckungen beträgt die Breite der Abdeckkästen (d.h. das Maß quer zur Führungsbahn) oft ein Mehrfaches der Abdeckkastentiefe (Abmessung in Längsrichtung der Führungsbahn). Wenn nun dieses Verhältnis Abdeckkastenbreite zu Abdeckkastentiefe, d.h. B : T relativ groß ist, dann entsteht sehr leicht die Gefahr eines Verkantens von Abdeckkästen relativ zueinander. Es ist dann erforderlich, entsprechende Längsführungseinrichtungen, wie z.B. Scherenglieder oder dergleichen einzubauen, die jedoch verhältnismäßig aufwendig sind und einen relativ großen Einbauraum benötigen.

Um aufwendige Längsführungseinrichtungen zu vermeiden, ist auch bereits eine Teleskopabdeckung entsprechend dem Oberbegriff des Anspruchs 1 vorgeschlagen worden (DE-C 1 157 055). Hiernach können von den Rückwänden der Abdeckkästen jeweils in den von der Deckwand und den Seitenwänden umschlossenen Innenraum hineinragende Tragansätze vorgesehen sein, die – etwa im Längsschnitt durch die Abdeckung betrachtet – entweder als Z-förmig gebogene oder als rechtwinkelig abgebogene Bleche ausgebildet sind, deren am vorderen Rand abgebogener Schenkel senkrecht zur Führungsbahn steht und sich offensichtlich direkt auf dieser Führungsbahn abstützt. Ferner tragen diese vorderen Schenkel der Tragansätze an ihren Enden etwa winkelig angeordnete Gleitelemente, die an den Seitenwänden (Längsseiten) der zugehörigen Führungsbahn anliegen. Zumindest bei größeren Abdeckkästen-Abmessungen sowie bei mehr oder weniger weit auseinandergezogenen Teleskopabdeckungen läßt es sich durch die abgebogenen vorderen Tragansatz-schenkel meist nicht vermeiden, daß es zu einer unruhigen, mitunter sogar leicht vibrierenden Gleitabstützung kommt, was durch die direkte Abstützung des vorderen Randes dieses Tragansatzes auf der Führungsbahn noch verstärkt werden kann.

Der Erfindung liegt daher die Aufgabe zugrunde, eine Teleskopabdeckung der im Oberbegriff des Anspruches 1 vorausgesetzten Art zu schaffen, die unter Vermeidung von Scherengliedern oder anderen aufwendigen Längsführungseinrichtungen sowie bei relativ einfacher Konstruktion, geringem Raumbedarf und auch bei relativ großen Abmessungsverhältnissen von B:T (wie oben erläutert) eine stets zuverlässige und verkantungsfreie Führungsfunktion gewährleistet.

Diese Aufgabe wird erfindungsgemäß durch die im Kennzeichen des Anspruches 1 angegebenen Merkmale gelöst.

Bei dieser erfindungsgemäßen Ausbildung der Teleskopabdeckung sind die Ansätze an den Rückwänden der Abdeckkästen nicht als reine Tragansätze für die Gleitelemente, sondern als echte Führungsansätze ausgebildet, wobei sie in dieser Ausbildung dann gestaffelt angeordnet sind und übereinanderliegende Führungsansätze sich einander untergreifen. Da hierbei außerdem die Gleitelemente an den einander gegenüberliegenden Längskanten der Führungsansätze befestigt sind und sich mindestens über etwa die ganze Länge dieser Längskanten erstrecken, ist sowohl zwischen den Führungsansätzen untereinander als auch zwischen den Führungsansätzen und den entsprechenden Führungsbahn-Längsseiten eine ausgezeichnete, sowie besonders zuverlässige und verkantungsfreie Längsführung der einzelnen Abdeckkästen gegeneinander selbst dann gewährleistet, wenn das erläuterte Abmessungsverhältnis B:T relativ groß (insbesondere auch größer als 7:1) ist. Da ferner diese Führungsansätze in den von den Deckwänden und den Seitenwänden umschlossenen, ohnehin freien Innenraum hineinragen, hat diese Teleskopabdeckung einen verhältnismäßig kleinen Raumbedarf; konstruktiv aufwendige Längsführungsanordnungen, wie z.B. Scherenglieder oder dergleichen, können entfallen. Darüber hinaus führen vor allem die zwischen den einzelnen Führungsansätzen sowie zwischen den Führungsansätzen und den Führungsbahnen vorhandenen Gleitelemente zu einem relativ geringen Verschleiß.

Weitere Ausgestaltungen und Weiterbildungen der Erfindung sind Gegenstand der Unteransprüche.

Einige Ausführungsbeispiele der Erfindung seien nachfolgend anhand der Zeichnung näher erläutert.

In dieser Zeichnung zeigen

Fig. 1 eine Frontansicht der erfindungsgemäßen Teleskopabdeckung bei ihrer Zuordnung zu Führungsbahnen einer Werkzeugmaschine;

Fig. 2 und 3 verschiedene Schnittansichten entlang der Linien II-II bzw. III-III in Fig.1;

Fig.4, 5 und 6 ähnliche Schnittansichten wie Fig.2, jedoch von drei verschiedenen anderen Ausführungsformen der Teleskopabdeckung;

Fig.7 eine Stirnansicht der Teleskopabdeckung zur Erläuterung eines weiteren Ausführungsbeispieles;

Fig.8 eine Stirnansicht einer weiteren Ausführungsform der Teleskopabdeckung, bei der eine einzige Führungsbahn seitlich umgriffen wird;

Fig.9 eine Querschnittsansicht durch ein weiteres Ausführungsbeispiel mit einer asymmetrischen Anordnung der Führungsansätze für die einzelnen Abdeckkästen.

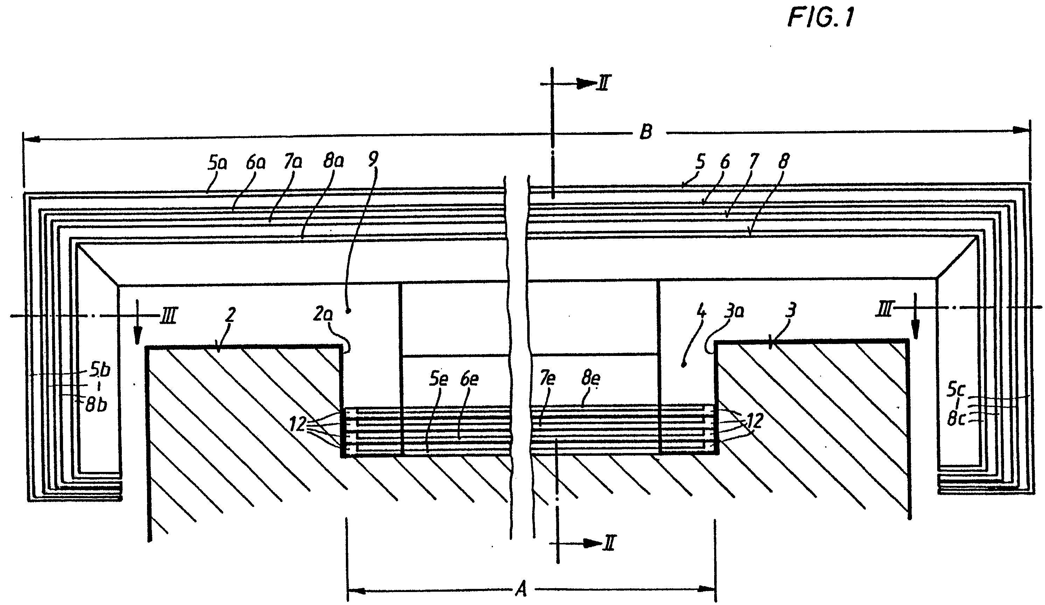

Anhand der Fig.1 bis 3 sei ein erstes Ausführungsbeispiel der erfindungsgemäßen Teleskopabdeckung 1 erläutert, die zur Abdeckung und somit zum Schutz von in diesem Falle zwei Führungsbahnen 2, 3 ausgebildet ist, die Teil einer nicht näher veranschaulichten Werkzeugmaschine sind. Diese beiden Führungsbahnen 2 und 3 verlaufen parallel und mit einem Abstand A zueinander. In Fig.1 läßt sich erkennen, daß diese beiden Führungsbahnen 2 und 3 gewissermaßen Teil-Führungsbahnen einer einzigen Gesamtführungsbahn sind, so daß zwischen diesen beiden Führungsbahnen 2 und 3 ein nach oben offener Zwischenraum 4 vorhanden ist.

Es sei in diesem ersten Ausführungsbeispiel ferner angenommen, daß die Teleskopabdeckung 1 aus vier teleskopartig ineinandergreifenden Abdeckkästen 5, 6, 7, 8 besteht, die jeweils eine Deckwand 5a, 6a, 7a, 8a, zwei Seitenwände 5b, 5c, 6b, 6c, 7b, 7c.und 8b, 8c sowie eine Rückwand 5d, 6d, 7d und 8d enthalten.

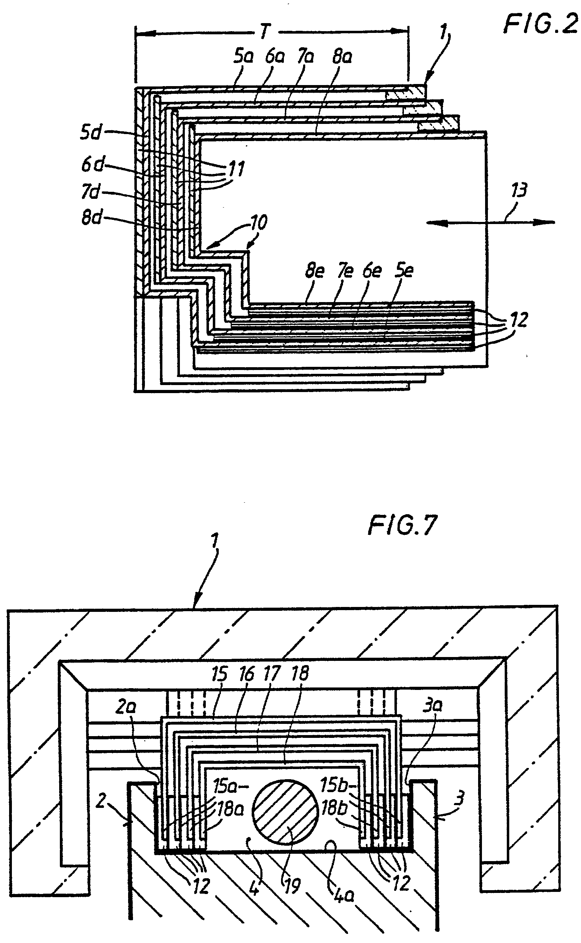

Die Rückwand jedes Abdeckkastens 5, 6, 7, 8 ist nun an ihrer der Deckwand abgekehrten Seite (in den Fig.1 und 2 also an ihrer unteren Seite bzw. an ihrem unteren Rand) mit einem im mittleren Abschnitt angeordneten Führungsansatz 5e, 6e, 7e bzw. 8e versehen. Jeder Führungsansatz ist - wie besonders die Fig.1 und 2 zeigen - plattenförmig ausgebildet und ragt von der zugehörigen Rückwand (5d bis 8d) in den jeweils von der Deckwand und den beiden Seitenwänden umschlossenen Innenraum 9 des betreffenden Abdeckkastens 5 bis 8 freitragend hinein.

Gemäß Fig.2 können diese Führungsansätze 5e bis 8e etwa in Form von ebenen Platten ausgebildet sein, die im Bereich der zugehörigen Rückwand 5d bis 8d querverlaufende Mehrfachabkantungen 10 aufweisen können, die einerseits der Verstärkung (Stabilität) dieser Führungsansätze und zum andern der Anpassung an die zugehörige Rückwand dienen.

Die einzelnen Führungsansätze 5e bis 8e können durch einstückige Abkantungen des mittleren Bereiches der zugehörigen Rückwand 5d bis 8d ausgebildet sein oder auch - wie in Fig.2 angedeutet - durch gesondert aus mehrfach entsprechend abgekanteten Platten hergestellte Teile, die mit einer schenkelartig vertikal nach oben gezogenen Verbindungsplatte 11 an der Rückseite der zugehörigen Rückwand befestigt sind (z.B. durch Schweißen, Nieten, Schrauben oder dergleichen).

Wie in den Fig.1 und 2 dargestellt ist, sind die Führungsansätze 5e bis 8e der einzelnen Abdeckkästen 5 bis 8 in ihrer Höhenlage so gestaffelt, daß der Führungsansatz eines Abdeckkastens jeweils vom Führungsansatz des nächstgrößeren Abdeckkastens untergriffen wird, z.B. untergreift der Führungsansatz 5e des größten Abdeckkastens 5 den Führungsansatz 6e des zweitgrößten Abdeckkastens 6, während dieser wiederum den Führungsansatz 7e des drittgrößten Abdeckkastens 7 untergreift usw..

Diese sich untergreifende und dabei gegenseitig abstützende Zusammenordnung der Führungsansätze 5e bis 8e erstreckt sich von den Rückwänden 5d bis 8d aus in den Zwischenraum 4 zwischen den beiden Führungsbahnen 2 und 3, wobei zwischen der inneren Längsseite 2a der ersten Führungsbahn 2 und den ihr zugewandten Längskanten der Führungsansätze 5e bis 8e einerseits und zwischen der inneren Längsseite 3a der zweiten Führungsbahn 3 und den ihr zugewandten Längskanten der Führungsansätze 5e bis 8e andererseits jeweils ein deutlicher Abstand vorhanden ist. Zwischen den einzelnen Führungsansätzen 5e bis 8e sowie zwischen diesen Führungsansätzen und den Führungsbahnen 2, 3 bzw. in den vorher erläuterten Abständen zu den jeweiligen inneren Längsseiten 2a bzw. 3a sind nun passende Gleitelemente 12 vorgesehen, die aus geeignetem Material mit niedrigem Reibungskoeffizienten (z.B. entsprechende Kunststoffe oder Metallegierungen) hergestellt sind. Als Gleitelemente 12 können in Form und Größe entsprechende, gleichartig ausgeführte Standard-Gleitelemente gewählt werden. Diese Gleitelemente 12 sind jeweils an den gegenüberliegenden Längskanten der Führungsansätze 5e bis 8e befestigt (beispielsweise mittels Nieten oder Schrauben).

Gemäß der Darstellung in Fig.2 erstrecken sich die Gleitelemente 12 etwa über die ganze - horizontale - Länge der zugehörigen Führungsansätze 5e bis 8e, d.h. soweit sich diese Führungsansätze im Zwischenraum 4 zwischen den beiden Führungsbahnen 2 und 3 erstrecken.

Durch diese Ausbildung, Anordnung und Gleitabstützung ergibt sich eine ausgezeichnete und leichtgängige Führung der einander benachbarten Abdeckkästen 5 bis 8 gegeneinander, wobei diese ausgezeichnete Führung selbst dann zuverlässig und verkantungsfrei sein kann, wenn das weiter oben erläuterte Abmessungsverhältnis B : T (d.h. Kastenbreite B in Fig.1 zu Kastentiefe T in Fig.2) größer ist als etwa 7 : 1.

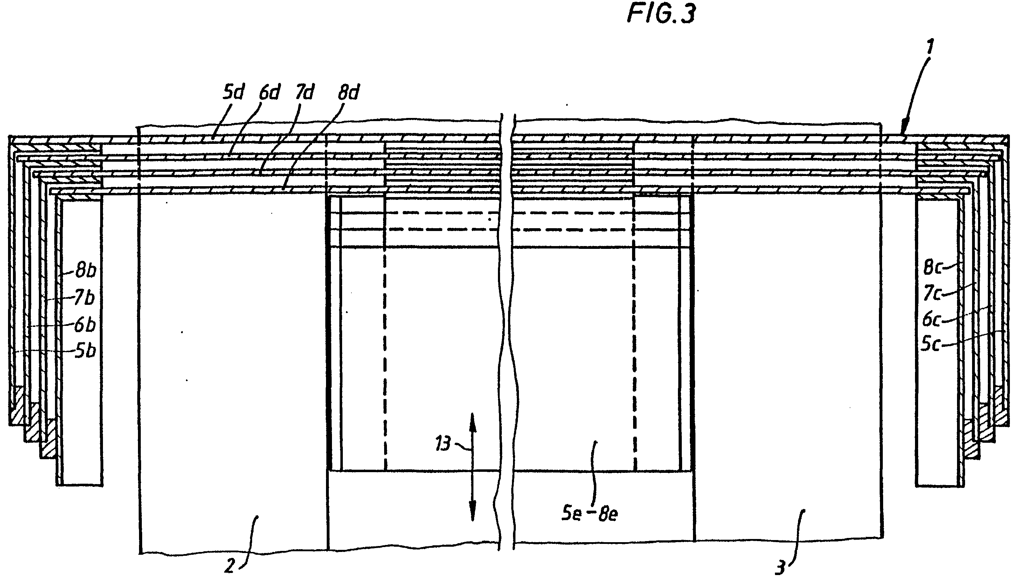

Die teleskopartig ineinandergreifenden Abdeckkästen 5 bis 8 können in Richtung des Doppelpfeiles 13 (Fig.2 und 3) auseinandergezogen bzw. ineinandergeschoben werden (Fig.2 und 3 zeigen den vollkommen ineinandergeschobenen Zustand). Bei diesem teleskopartigen Gegeneinanderverschieben der Abdeckkästen 5 bis 8 stehen die Gleitelemente 12 der Führungsansätze 5e bis 8e an den inneren Längsseiten 2a und 3a der Führungsbahnen 2, 3 in Gleiteingriff.

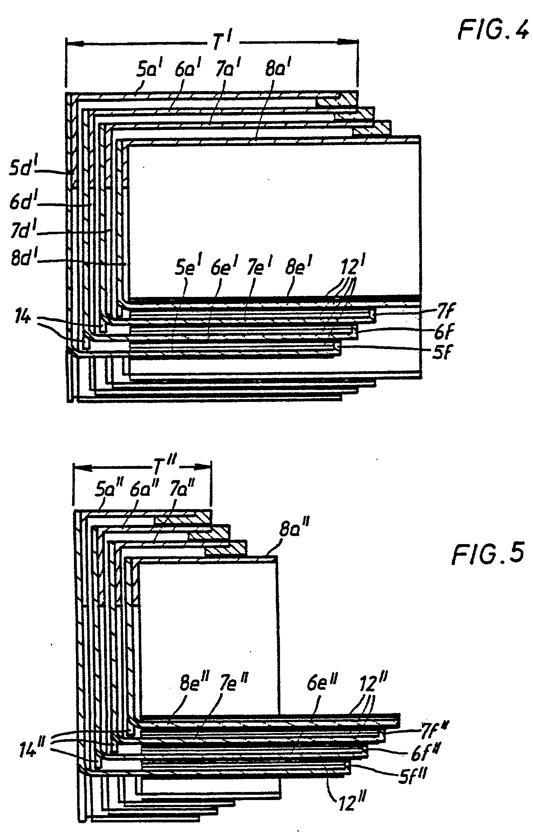

In den Fig.4, 5 und 6 sind drei Ausführungsvarianten insbesondere für verschiedene Ausbildungsmöglichkeiten der Führungsansätze veranschaulicht. Da ansonsten der Aufbau gleichartig sein kann, wie anhand der Fig.1 bis 3 beschrieben worden ist, werden bei diesen drei Ausführungsvarianten dieselben Bezugszeichen für gleiche Elemente beibehalten, wobei jeweils lediglich ein Beistrich bzw. zwei bzw. drei Beistriche zu den Bezugszahlen hinzugefügt werden.

Im Beispiel der Fig.4 sind alle Führungsansätze 5e', 6e', 7e' und 8e' in Form von ebenen Platten ausgeführt, die frei von der zugehörigen Rückwand 5d' bis 8d' in den von den Deckwänden und Seitenwänden umschlossenen Innenraum der betreffenden Abdeckkästen hineinragen. An ihren vorderen Enden können die Führungsansätze 5e' bis 7e' mit einer etwa nach oben vorstehenden, z.B. durch entsprechende Abkantungen gebildeten Anschlagleiste 5f bis 7f versehen sein. Diese wirken zusammen mit nach unten vorstehenden Anschlagvorsprüngen 14 an den Rückwänden 6d', 7d' und 8d' für eine Mitnahme der jeweils einander benachbarten Abdeckkästen.

Während bei dem zuvor beschriebenen Ausführungsbeispiel die einzelnen Abdeckkästen eine verhältnismäßig große Tiefe T' aufweisen, zeigt das nächste Ausführungsbeispiel der Fig.5 eine im wesentlichen gleichartige Ausbildung wie die Fig.4, wobei die Kastentiefe T" jedoch deutlich kleiner ist, so daß sich in diesem Beispiel gemäß Fig.5 ein verhältnismäßig großes Verhältnis B : T" ergibt.

Um bei diesem Ausführungsbeispiel gemäß Fig.5 trotzdem eine gleich gute, zuverlässige und verkantungsfreie gegenseitige Längsführung gewährleisten zu können, sind die Führungsansätze 5e" bis 8e" im Vergleich zu den zugehörigen Deckwänden 5a" bis 8a" erheblich länger ausgeführt (in der Zeichnung etwa doppelt so lang), während im vorhergehenden Beispiel (Fig.4) Führungsansätze 5e' bis 8e' etwa gleich lang sein können wie die zugehörigen Deckwände 5a' bis 8a'. Anschlagleisten 5f" bis 7f" können hier wiederum mit Anschlagvorsprüngen 14" im Sinne von Mitnahmeanschlägen zusammenwirken.

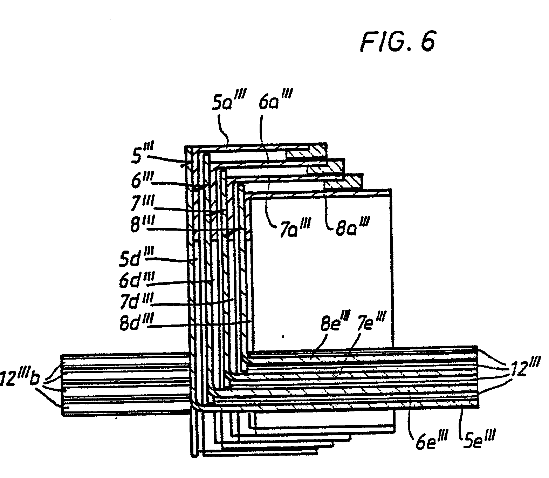

Eine ganz besonders zuverlässige, verkantungsfreie Längsführung der einzelnen Abdeckkästen 5" bis 8" gegenseitig ist in Fig.6 veranschaulicht. Hier können die plattenförmigen Führungsansätze 5e" bis 8e" wiederum (wie bei Fig.5) deutlich länger sein als die zugehörigen Deckwände 5a" bis 8a", wobei die an den Längskanten dieser Führungsansätze befestigten Gleitelemente 12" sich nicht nur über die ganze Länge dieser Führungsansätze 5e" bis 8e", sondern über die Rückwände 5d" bis 8d" der zugehörigen Führungsansätze hinaus erstrecken, wie es in dieser Fig.6 durch die sich nach hinten erstreckenden Verlängerungen 12"b zu erkennen ist.

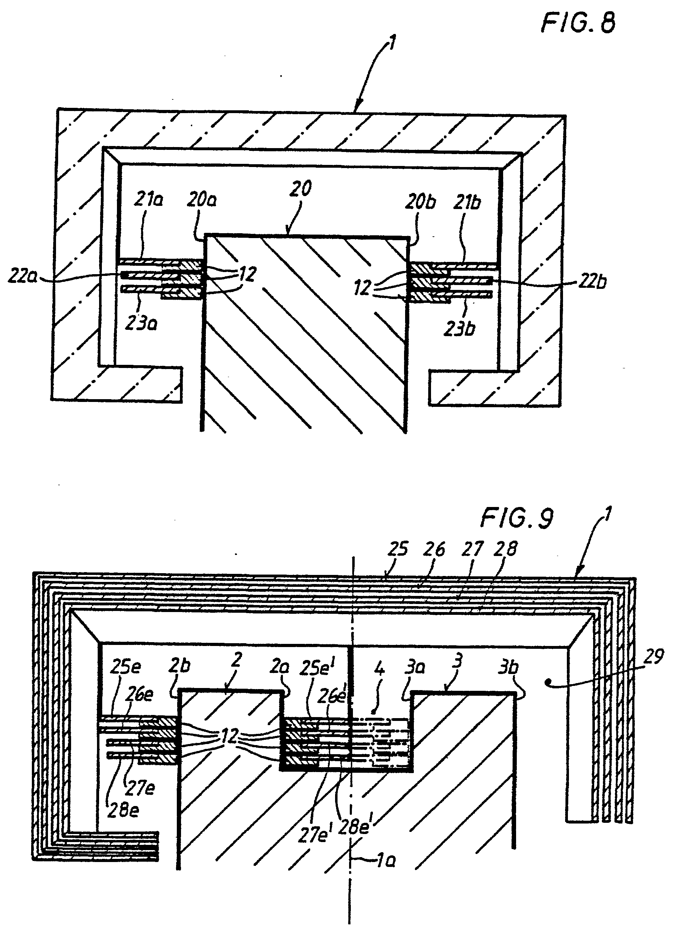

Fig.7 zeigt ein Ausführungsbeispiel der Teleskopabdeckung 1, bei der die Zusammenordnung der aus jeweils einer Deckwand, zwei Seitenwänden und einer Rückwand bestehenden Abdeckkästen gleichartig sein kann, wie es anhand der Fig.1 beschrieben und veranschaulicht ist, mit Ausnahme der Formgebung der einzelnen Führungsansätze. Da diese Abdeckkästen selbst die gleiche Grundgestalt und Zusammenordnung haben können wie beim ersten Beispiel zeigt diese Stirnansicht (Fig.7) nur die Umrisse des gesamten Abdeckkastenpaketes.

Die von den nicht näher veranschaulichten Rückwänden der einzelnen Abdeckkästen in deren Innenraum - senkrecht zur Zeichenebene der Fig.7 gegen den Betrachter - hineinragenden Führungsansätze 15, 17, 18 und 19 sind in diesem Falle jeweils durch längsverlaufende Mehrfachabkantungen (rechtwinklige Abkantungen) trogförmig mit gegen die Führungsbahnen 2, 3 bzw. gegen die Gesamtführungsbahn offener Trogseite ausgebildet. Hierbei sind die Gleitelemente 12 an den freien Troglängskanten 15a bis 18a bzw. 15b bis 18b derart befestigt, daß sich die jeweils einander benachbarten Führungsansätze 15, 16, 17, 18 einerseits gegenseitig und andererseits insgesamt oder einzeln noch an den ihnen zugewandten inneren Längsseiten 2a bzw. 3a der Führungsbahnen 2, 3 und gegebenenfalls an dem Führungsbahnboden 4a im Zwischenraum 4 zwischen den beiden Führungsbahnen 2 und 3 gleitend abstützen. Wie in Fig.7 zu erkennen ist, sind die trogförmigen Führungsansätze 15 bis 18 aller Ab deckkästen dieses Beispieles ähnlich wie die Abdeckkästen selbst ineinandergeschachtelt.

Durch diese Art der Ausbildung für die Führungsansätze 15 bis 18 ergibt sich nicht nur eine besonders hohe Quer- und Längsstabilität, sondern es besteht hierdurch gleichzeitig noch die Möglichkeit, trotz dieser Art der Längsführungen zumindest eine im Zwischenraum 4 zwischen den Führungsbahnen 2 und 3 längsverlaufende Antriebsspindel oder dergleichen 19 zu überbrücken und ebenfalls zu schützen.

Ein anderes Ausführungsbeispiel zeigt Fig.8. Hier sei wiederum angenommen, daß die Teleskopabdeckung 1 mit in ihrem Grundaufbau gleichartig ausgeführten und teleskopartig ineinandergreifenden Abdeckkästen ausgebildet ist, so daß diese Teleskopabdeckung wiederum nur in der Stirnansicht mit den Umrissen eines gesamten Abdeckkastenpaketes veranschaulicht ist.

Das Besondere dieses Ausführungsbeispieles (Fig.8) besteht darin, daß eine einzige, ungeteilte und in der Zeichnung etwa rechteckig ausgeführte Führungsbahn 20 einer nicht näher veranschaulichten Werkzeugmaschine durch diese Teleskopabdeckung 1 abgedeckt und geschützt werden soll. Zu diesem Zweck tragen die - hier nicht näher veranschaulichten - Rückwände der Abdeckkästen je zwei mit Abstand und parallel zueinander verlaufende Führungsansätze 21a/21b, 22a/22b, 23a/23b, die diese einzige Führungsbahn 20 von außen her derart umfassen, daß sie jeweils mit einer äußeren Längsseite 20a, 20b dieser Führungsbahn 20 in Gleiteingriff stehen, wobei die gegen diese äußeren Führungsbahn-Längsseiten 20a und 20b gerichteten Längskanten der Führungsansätze 21a bis 23b wiederum mit gleichartigen Gleitelementen 12 wie bei den vorhergehenden Beispielen ausgestattet sind, die somit wiederum zwischen den einzelnen Führungsansätzen 21a bis 23b sowie zwischen diesen Führungsansätzen und den Führungsbahn-Längsseiten 20a und 20b vorhanden sind.

In gleichartiger Weise wie zuvor anhand der Fig.8 geschildert worden ist, können natürlich auch mehrere mit Abständen und parallel zueinander verlaufende Führungsbahnen einer Werkzeugmaschine von außen her umfaßt werden. Im Beispiel der Fig.9 wurden solche doppelten Führungsansätze (gemäß Fig.8) dann mit den den inneren FührungsbahnLängsseiten 2a und 3a gegenüberliegenden äußeren Längsseiten in Gleiteingriff stehen.

Während bei allen vorhergehenden Ausführungsbeispielen anhand der Fig.1 bis 8 alle Führungsansätze symmetrisch zu einer gedachten Längsmittellinie (die etwa gleich der Längsmittellinie der abzudeckenden Führungsbahn bzw. Führungsbahnen sein kann) von den zugehörigen Rückwänden der Abdeckkästen in den von den Deckwänden und den Seitenwänden umschlossenen Innenraum hineinragen, kann es für manche Einsatzfälle der Teleskopabdeckung 1 auch zweckmäßig sein, die Führungsansätze asymmetrisch von den zugehörigen Rückwänden in den genannten Innenraum der einzelnen Abdeckkästen hineinragen zu lassen, wie es nachfolgend anhand des Beispieles in Fig.9 erläutert sei.

Bei der Teleskopabdeckung 1 dieser Fig.9 sei zunächst der Einfachheit halber wieder davon ausgegangen, daß zwei gleichartige Führungsbahnen 2 und 3, die parallel und mit Abstand zueinander verlaufen und zu einer Werkzeugmaschine gehören, von der Teleskopabdeckung 1 abgedeckt und geschützt werden sollen, wobei diese Abdeckung 1 beispielsweise wiederum vier teleskopartig ineinandergreifende und gegeneinander verschiebbare Abdeckkästen 25, 26, 27, 28 enthält.

Von Bedeutung ist in diesem Beispiel der Fig.9, daß die im einzelnen nicht näher zu erkennenden Rückwände dieser Abdeckkästen 25 bis 28 - ähnlich wie im Beispiel der Fig.8 - zwei mit Abstand und parallel zueinander verlaufende Führungsansätze 25e/25e', 26e/26e', 27e/27e' und 28/28e' tragen, von denen die äußeren Führungsansätze 25e bis 28e jeweils entlang der äußeren Längsseite 2b der ersten Führungsbahn 2 und von denen die inneren Führungsansätze 25e' bis 28e' entlang der inneren Längsseite 2a dieser ersten Führungsbahn 2 gleitend geführt sind, indem sie sich wiederum über Gleitelemente 12 an diesen Führungsbahn-Längsseiten 2a und 2b sowie gegenseitig abstützen. Bezogen auf die bei 1a nur angedeutete Längsmittellinie für Teleskopabdeckung 1 und gleichzeitig für die Zusammenordnung der beiden Führungsbahnen 2 und 3 läßt sich erkennen, daß die Führungsansatzpaare 25e/25e' bis 28e/28e' jeder Abdeckkasten-Rückwand sich asymmetrisch sowohl in den Innenraum 29 der Abdeckkästen 25 bis 28 als auch zu der Zusammenordnung der Führungsbahnen 2, 3 erstrecken.

Wie in Fig.9 durch ausgezogene Linien dargestellt ist, kann diese zuvor beschriebene paarweise Ausbildung und Anordnung der Führungsansätze 25e/25e' bis 28e/28e' für jede Abdeckkasten-Rückwand vielfach vollkommen ausreichend sein. Darüber hinaus besteht bei der asymmetrischen Anordnung mehrerer Führungsansätze für jede Abdeckkasten-Rückwand jedoch auch noch - wie in Fig.9 strichpunktiert ergänzt - die Möglichkeit, die innerhalb des Zwischenraumes 4 zwischen den beiden Führungsbahnen 2 und 3 anzuordnenden Führungsansätze 25e' bis 28e' gewissermaßen spiegelbildlich zu ergänzen, so daß sich die inneren Führungsansätze 25e' bis 28e' - in ähnlicher Weise wie im Beispiel der Fig.1 bis 3 - an den inneren Längsseiten 2a und 3a beider Führungsbahnen 2 und 3 und zusätzlich die äußeren Führungsansätze 25e bis 28e entlang der äußeren Längsseite 2b der ersten Führungsbahn 2 (oder auch nur der äußeren Führungsbahn 3b der zweiten Führungsbahn 3) gleitend abstützen. In jedem Falle ergibt sich hierdurch eine besonders stabile, zuverlässige und verkantungsfreie Längsführung der einzelnen Abdeckkästen gegeneinander sowie gegenüber den zugehörigen Führungsbahnen.

**Patentansprüche**

1. Teleskopabdeckungen für Führungsbahnen einer Werkzeugmaschine, bestehend aus einer Anzahl von teleskopartig ineinandergreifenden Abdeckkästen (5, 6, 7, 8) mit jeweils einer Deckwand (5a, 6a, 7a, 8a), zwei Seitenwänden (5b/ 5c, 6b/6c, 7b/7c, 8b/8c) und einer Rückwand (5d, 6d, 7d, 8d), wobei

a) die Rückwand (5d, 6d, 7d, 8d) jedes Abdeckkastens (5, 6, 7, 8) wenigstens einen von ihrer (5a bis 8a) abgekehrten Seite in den von der Deckwand und den Seitenwänden (5b/5c bis 8b/8c) umschlossenen Innenraum (9) des betreffenden Abdeckkastens hineinragenden Ansatz (5e, 6e, 7e, 8e) trägt,

b) diese Ansätze (5e bis 8e) der einzelnen Abdeckkästen in ihrer Höhenlage so gestaffelt sind, daß der Ansatz eines Abdeckkastens jeweils vom Ansatz des nächstgrösseren Abdeckkastens untergriffen wird, und

c) an den einzelnen Ansätzen (5e bis 8e) Gleitelemente (12) zur Gleitabstützung an den entsprechenden Führungsbahn-Längsseiten (2a, 3a) vorgesehen sind,

d) alle in den umschlossenen Innenraum (9) der Abdeckkästen (5 bis 8) hineinragenden Ansätze sind als Führungsansätze (5e bis 8e) ausgebildet, an deren gegenüberliegenden Längskanten die Gleitelemente (12) befestigt dadurch gekennzeichnet, daß sich die Gleitelemente mindestens etwa über die ganze Länge der zugehörigen Führungsansätze erstrecken, wobei diese Führungsansätze – zusätzlich zur Gleitabstützung an den Führungsbahn-Längsseiten (2a, 3a) – sich gegenseitig abstützend zusammengeordnet sind.

2. Teleskopabdeckung nach Anspruch 1, dadurch gekennzeichnet, daß die an den Längskanten der Führungsansätze (5e''' bis 8e''') befestigten Gleitelemente (12''') sich über die ganze Länge sowie nach rückwärts über die Rückwand (5d''' bis 8d''') der zugehörigen Führungsansätze hinaus erstrecken.

3. Teleskopabdeckung nach Anspruch 1 zur Abdeckung von wenigstens zwei parallel und mit Abstand zueinander verlaufenden Führungsbahnen, dadurch gekennzeichnet, daß die Führungsansätze (5e bis 8e) sich von den Rückwänden (5d bis 8d) aus in den Zwischenraum (4) zwischen den beiden Führungsbahnen (2, 3) erstrecken und mit ihren Gleitelementen (12) an den beiden inneren Längsseiten (2a, 3a) dieser Führungsbahnen in Gleiteingriff stehen.

4. Teleskopabdeckung nach Anspruch 1 zur Abdeckung von wenigstens zwei parallel und mit Abstand zueinander verlaufenden Führungsbahnen, dadurch gekennzeichnet, daß die Rückwand jedes Abdeckkastens (25, 26, 27, 28) wenigstens zwei mit Abstand und parallel zueinander verlaufende Führungsansätze (25e/25e', bis 28e/28e') trägt, von denen ein äußerer Führungsansatz (25e bis 28e) entlang der äußeren Längsseite (2b) der ersten Führungsbahn (2) und von denen ein innerer Führungsansatz (25e' bis 28e') entlang der inneren Längsseite (2a) dieser ersten Führungsbahn (2) gleitend geführt ist.

5. Teleskopabdeckung nach Anspruch 1, dadurch gekennzeichnet, daß die Rückwände der Abdeckkästen zwei mit Abstand und parallel zueinander verlaufende Führungsansätze (21a/21b bis 23a/ 23b) tragen, die die Führungsbahnen (20) von außen her derart umfassen, daß sie jeweils mit einer äußeren Längsseite (20a/20b) der Führungsbahnen in Gleiteingriff stehen.

6. Teleskopabdeckung nach Anspruch 1, dadurch gekennzeichnet, daß jeder Führungsansatz (5e bis 8e) plattenförmig ausgebildet ist und von der zugehörigen Rückwand (5d bis 8d) in den jeweiligen Abdeckkasten-Innenraum (9) freitragend hineinragt.

7. Teleskopabdeckung nach Anspruch 6, dadurch gekennzeichnet, daß zumindest einige plattenförmige Führungsansätze (5e bis 8e) querverlaufende Verstärkungs-Abkantungen (10) aufweisen.

8. Teleskopabdeckung nach Anspruch 1, dadurch gekennzeichnet, daß jeder Führungsansatz (15 bis 18) durch längsverlaufende Mehrfachabkantungen trogförmig mit gegen die Führungsbahnen (2, 3) offener Trogseite ausgebildet ist, wobei die Gleitelemente (12) an den freien Längskanten (15a/15b bis 18a/18b) befestigt und die trogförmigen Führungsansätze aller Abdeckkästen ineinandergeschachtelt sind.

## Revendications

1. Chape télescopique de protection des glissières d'une machine-outil, se composant de plusieurs caissons (5, 6, 7, 8) s'emboîtant télescopiquement les uns dans les autres et dont chacun comprend une cloison de couverture (5a, 6a, 7a, 8a), deux cloisons latérales (5b/5c, 6b/6c, 7b/7c, 8b/8c) ainsi qu'une cloison arrière (5d, 6d, 7d, 8d), chape dans laquelle:

a) la cloison arrière (5d, 6d, 7d, 8d) de chaque caisson (5, 6, 7, 8) supporte au moins une pièce complémentaire (5e, 6e, 7e, 8e) partant de son côté tourné à l'opposé de celui de la cloison de couverture (5a à 8a) et pénétrant dans le volume interne (9) du caisson correspondant qui est inscrit entre la cloison de couverture et les cloisons latérales (5b/5c à 8b/8c),

b) ces pièces complémentaires (5e à 8e) des caissons individuels sont superposées de manière que celle d'un caisson soit attaquée par le fond par celle du caisson de dimensions immédiatement supérieures,

c) les pièces complémentaires individuelles (5e à 8e) sont équipées d'éléments de glissement (12) formant des appuis coulissants contre les côtés longitudinaux correspondants (2a, 3a) des glissières,

d) toutes les pièces complémentaires pénétrant dans le volume interne (9) des caissons (5 à 8) sont conformées en pièces de guidage (5e à 8e) sur les côtés longitudinaux opposés desquelles sont fixés les éléments de glissement (12), caractérisée en ce que les éléments de glissement (12) se prolongent au moins approximativement sur la longueur totale des pièces complémentaires de guidage, ces dernières étant assemblées de manière à prendre appui les unes sur les autres – en plus de leur appui à coulissement contre les côtés longitudinaux (2a, 3a) des glissières.

2. Chape télescopique de protection selon la revendication 1, caractérisée en ce que les éléments de glissement (12''') fixés sur les côtés longitudinaux des pièces complémentaires de guidage (5e''' à 8e''') se prolongent sur la longueur totale des pièces complémentaires de guidage correspondantes ainsi que vers l'arrière, au-delà de la cloison arrière (5d''' à 8d''').

3. Chape télescopique de protection selon la revendication 1 destinée à recouvrir au moins deux glissières parallèles et placées à distance l'une de l'autre, caractérisée en ce que les pièces complémentaires de guidage (5e à 8e) partant des cloisons arrière (5d à 8d) pénètrent dans l'espace (4) compris entre les deux glissières (2, 3) et leurs éléments de glissement (12) coulissent contre les deux côtés longitudinaux intérieurs (2a, 3a) de ces glissières.

4. Chape télescopique de protection selon la revendication 1, destinée à recouvrir au moins deux glissières parallèles et placées à distance l'une de l'autre, caractérisée en ce que la cloison arrière de chaque caisson (25, 26, 27, 28) supporte au moins deux pièces complémentaires de guidage (25e/25e' à 28e/28e') qui sont parallèles et placées à distance l'une de l'autre, l'une de ces pièces complémentaires de guidage, qui est extérieure, (25e à 28e) étant guidée à coulissement le long du côté longitudinal extérieur (2b) de la première glissière (2) et une autre de ces pièces complémentaires, qui est intérieure, (25e' à 28e') étant guidée à coulissement le long du côté longitudinal intérieur (2a) de cette première glissière (2).

5. Chape télescopique de protection selon la revendication 1, caractérisée en ce que la cloison arrière de chaque caisson supporte deux pièces complémentaires de guidage (21a/21b à 23a/23b) qui sont parallèles et placées à distance l'une de l'autre et qui enserrent la glissière (20) par l'extérieur de manière que chacune coulisse le long d'un côté longitudinal extérieur (20a/20b) de ladite glissière.

6. Chape télescopique de protection selon la revendication 1, caractérisée en ce que chaque pièce complémentaire de guidage (5e à 8e) est conformée en plaque et pénètre en porte-à-faux dans le volume interne (9) du caisson correspondant en partant de la cloison arrière (5d à 8d) de ce dernier.

7. Chape télescopique de protection selon la revendication 6, caractérisée en ce qu'au moins certaines des pièces complémentaires de guidage en forme de plaques (5e à 8e) comportent des plis transversaux de raidissement (10).

8. Chape télescopique de protection selon la revendication 1, caractérisée en ce que chaque pièce complémentaire de guidage (15 à 18) est conformée, par plusieurs rabattements longitudinaux, en cuvette dont le côté ouvert est tourné vers les glissières (2, 3), les éléments de glissement (12) étant fixés sur les bords longitudinaux libres (15a/15b à 18a/18b) de ces pièces et les pièces complémentaires de guidage en forme de cuvettes de tous les caissons s'emboîtent les unes dans les autres.

## Claims

1. Telescopic covers for guideways of a machine tool, consisting of a plurality of cover boxes (5, 6, 7, 8) which interengage telescopically and each have a top wall (5a, 6a, 7a, 8a), two side walls (5b/5c, 6b/6c, 7b/7c, 8b/8c) and a rear wall (5d, 6d, 7d, 8d), in which:

    a) the rear wall (5d, 6d, 7d, 8d) of each individual cover box (5, 6, 7, 8) bears at least one lug (5e, 6e, 7e, 8e) which projects from the side facing away from the top wall (5a to 8a) into the inner space (9) enclosed by the top wall and the side walls (5b/5c to 8b/8c);

    b) these lugs (5e to 8e) of the individual cover boxes are graded in height in such a way that the lug of a cover box is engaged in each case by the lug of the next larger cover box, and

    c) slide elements (12) for sliding support on the corresponding long sides (2a, 3a) of the guideway are provided between the individual lugs (5e to 8e) and between these guide lugs,

    d) all the lugs projecting into the enclosed inner space (9) of the cover boxes (5 to 8) are constructed as guide lugs (5e to 8e) with the slide elements (12) fixed on the opposing long edges thereof, characterised in that the slide elements at least extent approximately over the entire length of the appertaining guide lugs, and these guide lugs – in addition to the sliding support on the long sides (2a, 3a) of the guideway – are co-ordinated so as to be reciprocally supporting.

2. Telescopic cover as claimed in claim 1, characterised in that the slide elements (12''') are fixed on the long edges of the guide lugs (5e''' to 8e''') and extend over the entire length and rearwards over the rear wall (5d''' to 8d''') of the appertaining guide lugs.

3. Telescopic cover as claimed in claim 1 to cover at least two guideways which are spaced from and run parallel to one another, characterised in that the guide lugs (5e to 8e) extend from the rear walls (5d to 8d) into the space (4) between the two guideways (2, 3) and are in sliding engagement with their slide elements (12) on the two inner long sides (2a, 3a) of these guideways.

4. Telescopic cover as claimed in claim 1 to cover at least two guideways which are spaced from and run parallel to one another, characterised in that the rear wall of each over box (25, 26, 27, 28) bears at least two guide lugs (25e/25e' to 28e/28e') which are spaced from and run parallel to one another, of which an outer guide lug (25e to 28e) is guided so as to slide along the outer long side (2b) of the first guideway (2) and an inner guide lug (25e' to 28e') is guided so as to slide along the inner long side (2a) of this first guideway (2).

5. Telescopic cover as claimed in claim 1, characterised in that the rear walls of the cover boxes bear two guide lugs (21a/21b to 23a/23b) which are spaced from and run parallel to on another and which surround the guideways (20) from the exterior in such a way that they are in each case in sliding engagement with one outer long side (20a/20b) of the guideways.

6. Telescopic cover as claimed in claim 1, characterised in that each guide lug (5e to 8e) is of plate-like construction and projects in a self-supporting manner from the appertaining rear wall (5d to 8d) into the relevant cover box interior (9).

7. Telescopic cover as claimed in claim 7, characterised in that at least some plate-like guide lugs (5e to 8e) have transverse reinforcing bends (10).

8. Telescopic cover as claimed in claim 1, characterised in that each guide lug (15 to 18) is formed by longitudinally extending multiple bends into a trough shape with one side of the trough open towards the guideways (2, 3). the slide elements (12) are fixed on the free long edges (15e/15b to 18a/18b) and the trough-shaped guide lugs of all cover boxes fit into one another.

FIG.1

FIG.2

FIG.7

# FIG.3

5d 6d 7d 8d

1

8b
7b
6b
5b

8c
7c
6c
5c

13

5e - 8e

2

3

EP 0 286 811 B1

FIG.4

FIG.5

FIG. 6

FIG.8

FIG.9